# FASCICULE DE BREVET EUROPEEN

(11) **EP 2 715 705 B1**
(45) Date de publication et mention de la délivrance du brevet: **06.09.2017**
(21) Numéro de dépôt: 12731056.3
(22) Date de dépôt: 24.05.2012
(51) Int. Cl.: G09B 21/00, G06F 3/00, G06F 3/01

(54) **DISPOSITIF D'AFFICHAGE A SURFACE DÉFORMABLE ET A CAPTEURS DE POSITION.**
ANZEIGEVORRICHTUNG MIT VERFORMBARER OBERFLÄCHE UND POSITIONSSENSOREN
DISPLAY DEVICE HAVING A DEFORMABLE SURFACE AND POSITION SENSORS

(30) Priorité: 30.05.2011 FR 1154722
(43) Date de publication de la demande: 09.04.2014
(73) Titulaire: Commissariat à l'Énergie Atomique et aux Énergies Alternatives, 75015 Paris (FR)
(72) Inventeur: BOLZMACHER, Christian, F-91120 Montrouge (FR); FERLAY, Fabien, F-26770 Taulignan (FR); HAFEZ, Moustapha, F-94110 Arcueil (FR); PERIQUET, Florian, F-54520 Laxou (FR)
(74) Mandataire: Bonnet, Michel
(86) Numéro de dépôt international: PCT/FR2012/051168
(87) Numéro de publication internationale: WO 2012/164207

(56) Documents cités:
- EP-A1- 1 717 667
- WO-A1-2005/015376
- GB-A- 2 463 012
- US-A1- 2004 056 877

## Description

La présente invention concerne un dispositif d'affichage à surface déformable et à capteurs de position d'au moins un toucher. Ce type de dispositif d'affichage est à la fois tactile grâce à sa surface d'affichage déformable et interactif puisqu'il est équipé pour réagir à un toucher.

Plus précisément, l'invention concerne un dispositif du type comportant :
- une pluralité d'actionneurs à éléments mobiles déplaçables de manière à déformer la surface déformable, ces éléments mobiles étant répartis dans l'espace occupé par la surface déformable, et
- un ensemble de capteurs de position d'au moins un toucher également répartis dans l'espace occupé par la surface déformable, et
- une membrane souple élastique disposée conte les éléments mobiles, s'étendant dans l'espace occupé par la surface déformable et apte à accompagner la déformation de cette dernière.

Un tel dispositif est décrit dans la demande internationale publiée sous le numéro WO 2005 / 015376 A1. Par ailleurs, le brevet publié sous le numéro US 5,717,423 décrit un dispositif qui prévoit une fixation directe des capteurs sur les actionneurs. Les capteurs prennent notamment la forme de capuchons à détection capacitive qui recouvrent les éléments mobiles des actionneurs. Cette configuration présente un risque d'interaction électrique entre les actionneurs et les capteurs. Elle présente en outre l'inconvénient d'un risque d'encrassement de la surface déformable puisque le doigt d'un utilisateur peut être en contact direct avec chaque élément mobile via son capuchon. Il est alors envisagé des joints ou des éléments de protection individuelle des éléments mobiles dont la complexité est importante.

Un autre dispositif est décrit dans la demande de brevet publiée sous le numéro DE 10 2005 047 837. Plus précisément, ce dispositif comporte un support rigide en forme de plaque munie de trous circulaires disposés en matrice. Les éléments mobiles sont prévus pour coulisser dans les trous et former ainsi, avec la plaque, la surface déformable. L'ensemble de capteurs est un réseau de conducteurs filaires disposés également en matrice et fixés sur la plaque rigide entre les trous, c'est-à-dire entre les éléments mobiles. Mais puisque les éléments mobiles et les capteurs doivent se partager l'espace occupé par la surface déformable, cela réduit la surface des capteurs et/ou des éléments mobiles. Cette configuration présente en outre les mêmes risques d'encrassement et d'interactions électriques que la précédente. Enfin, lorsque tous les éléments mobiles sont en position haute dans la surface déformable, il devient difficile pour les capteurs de détecter un toucher puisque leur position fixe sur la plaque, indépendante de celle des éléments mobiles, reste basse les rendant ainsi inaccessibles au toucher.

Il peut ainsi être souhaité de prévoir un dispositif d'affichage à surface déformable et à capteurs de position qui permette de s'affranchir d'au moins une partie des problèmes et contraintes précités.

L'invention a donc pour objet un dispositif d'affichage à surface déformable tel que définit par les revendications 1 à 4. Ainsi, la membrane souple remplit une double fonction :
- celle de protéger la partie actionnement, et donc la surface déformable, contre les risques d'encrassement ou de détérioration, et
- celle d'augmenter le découplage entre l'actionnement et la détection de toucher en solidarisant les capteurs à la membrane souple plutôt qu'aux actionneurs ou à leur support.

Notamment, le découplage des actionneurs et des capteurs permet d'augmenter la surface des capteurs et/ou des éléments mobiles puisque leurs géométries deviennent indépendantes, ce qui améliore la sensibilité et le retour haptique du dispositif. Ce découplage permet en outre d'assurer une bonne détection de toucher par les capteurs quelle que soit la position des éléments mobiles des actionneurs.

De façon optionnelle, la membrane souple élastique est formée dans un matériau élastomère de type silicone ou caoutchouc, ou formée d'un tissu élastique de type élasthanne ou soie.

De façon optionnelle également, la membrane souple élastique comporte une première portion supérieure de contact avec un utilisateur dans laquelle sont noyés les capteurs de position, une deuxième portion s'étendant vers les éléments mobiles et comportant une pluralité de pixels tactiles, et une troisième portion de support s'étendant entre les pixels tactiles, les deuxième et troisième portions étant venues de matière avec la première portion. Selon l'invention, les éléments mobiles et l'ensemble de capteurs sont répartis de façon régulière, notamment de façon matricielle, dans l'espace occupé par la surface déformable. Selon un mode de réalisation, capteurs sont des capteurs notamment capacitifs ou résistifs, conducteurs d'électricité. Selon un autre mode de réalisation, l'ensemble de capteurs est une matrice de fils conducteurs solidaire de la membrane souple élastique et apte à accompagner ses déformations, disposée de sorte que les fils conducteurs s'interposent entre les éléments mobiles. Selon un autre mode de réalisation, l'ensemble de capteurs est une matrice de canaux remplis d'un fluide conducteur, notamment une graisse conductrice, ces canaux étant formés dans la membrane souple élastique et aptes à accompagner ses déformations, et disposés de manière à recouvrir au moins partiellement les éléments mobiles. Selon un autre mode de réalisation, l'ensemble de capteurs est une matrice d'élastomère conducteur, notamment un élastomère chargé avec des particules conductrices, cette matrice d'élastomère conducteur étant formée dans la membrane souple élastique et apte à accompagner ses déformations, et disposée de manière à recouvrir au moins partiellement les éléments mobiles.

De façon optionnelle également, un dispositif d'affichage à surface déformable selon l'invention peut comporter une matrice de verrouillage des éléments mobiles à au moins trois positions fonctionnelle différentes :
- une première position fonctionnelle de déverrouillage dans laquelle les éléments mobiles sont libres de mouvement entre une position haute et une position basse,
- une deuxième position fonctionnelle de verrouillage dans laquelle seuls les éléments mobiles en position haute sont maintenus en position haute, les autres étant empêchés de prendre cette position haute, et
- une troisième position fonctionnelle d'affichage dans laquelle la matrice de verrouillage porte, depuis la deuxième position de verrouillage, les éléments mobiles maintenus en position haute contre la membrane souple élastique pour la déformer.

De façon optionnelle également, un dispositif d'affichage à surface déformable selon l'invention peut comporter un écran d'affichage comprenant :
- une plaque, cette plaque étant munie d'une pluralité de conduits traversants dans lesquels sont insérés, libres en déplacement orthogonal par rapport à la plaque, les éléments mobiles des actionneurs, et
- la membrane souple élastique disposée contre la plaque.

De façon optionnelle également, un dispositif d'affichage à surface déformable selon l'invention peut comporter une peau fine de texture différente de celle de la membrane souple élastique et s'étendant sur la face libre de la membrane souple élastique.

De façon optionnelle également, un dispositif d'affichage à surface déformable selon l'invention peut comporter un système d'affichage lumineux réparti dans l'espace occupé par la surface déformable, notamment une pluralité de diodes électroluminescentes réparties dans l'espace occupé par la surface déformable, chaque diode étant par exemple intégrée dans un élément mobile d'actionneur et/ou en périphérie de la surface déformable.

Un tel système d'affichage lumineux permet de générer un retour visuel améliorant la visibilité de l'écran d'affichage.

L'invention sera mieux comprise à l'aide de la description qui va suivre, donnée uniquement à titre d'exemple et faite en se référant aux dessins annexés dans lesquels :
- la figure 1 représente schématiquement en perspective sectionnée la structure générale d'un dispositif d'affichage à surface déformable selon un mode de réalisation de l'invention,
- la figure 2 représente schématiquement en coupe un détail du dispositif d'affichage de la figure 1, selon une première variante,
- la figure 3 représente schématiquement en coupe un détail du dispositif d'affichage de la figure 1, selon une deuxième variante,
- les figures 4 et 5 représentent schématiquement en perspective un détail du dispositif d'affichage de la figure 1, selon une troisième variante,
- la figure 6 représente schématiquement en perspective un détail du dispositif d'affichage de la figure 1, selon une quatrième variante, et
- les figures 7A, 7B, 7C et 7D représentent schématiquement en perspective différents modes de réalisation de pixels tactiles du dispositif d'affichage de la figure 1 selon la première variante de la figure 2.

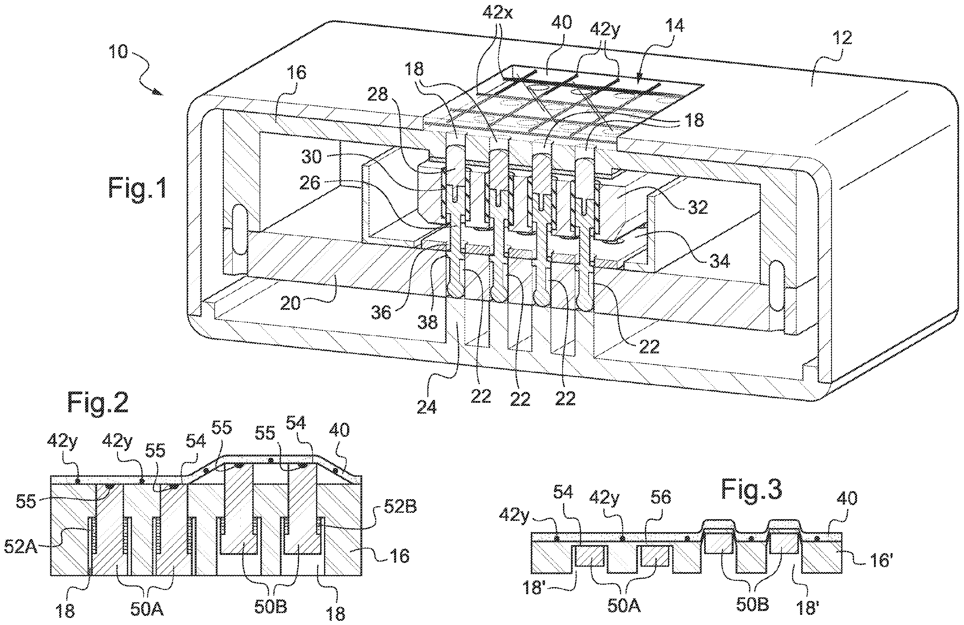

Un dispositif 10 d'affichage à surface déformable est représenté en perspective sectionnée sur la figure 1. Ce dispositif comporte un boîtier 12 de forme quelconque, à adapter selon l'application visée, percé sur l'une de ses parois, par exemple la paroi supérieure telle qu'orientée sur la figure 1, d'une fenêtre 14 de forme rectangulaire ou carrée destinée à recevoir un écran d'affichage à surface déformable.

A l'intérieur du boîtier 12, un châssis supérieur 16, de forme générale rectangulaire et percé de trous cylindriques traversants 18 disposés en matrice sur une surface correspondant à l'espace occupé par la fenêtre 14 , est plaqué contre la face interne de la paroi supérieure du boîtier 12. Ces trous cylindriques 18 sont ainsi répartis de façon régulière dans l'espace occupé par la fenêtre 14.

A l'intérieur du boîtier 12 également, un châssis inférieur 20, de forme générale rectangulaire et percé de trous cylindriques 22, traversants ou non, disposés en vis-à-vis des trous cylindriques traversants 18, est fixé à des extensions latérales du châssis supérieur 16 de façon connue en soi. Lorsque les trous cylindriques 22 sont traversants, le châssis inférieur 20 peut en outre reposer sur des nervures 24 s'étendant depuis le fond du boîtier 12 et dont une fonction est notamment d'obturer ces trous dans le fond du châssis inférieur 20.

Grâce aux extensions latérales du châssis supérieur 16, un volume est disponible entre les deux châssis 16 et 20 pour recevoir différents éléments constitutifs d'actionneurs à éléments mobiles du dispositif d'affichage 10.

Chacun de ces actionneurs comporte par exemple un noyau 26 de forme générale cylindrique constitué de fer, d'acier ou d'un aimant, plus généralement d'un matériau ferromagnétique doux ou dur. Chaque noyau 26 est surmonté d'une extension cylindrique 28 en matériau isolant. Comme illustré sur la figure 1, cette extension cylindrique 28 peut être fixée au noyau 26 par insertion. Elle peut être aussi désolidarisée du noyau 26 en étant simplement posée au dessus de lui et apte à être entraînée en déplacement dans le trou 18 correspondant. L'ensemble constitué d'un noyau 26 et de son extension 28 forme l'élément mobile d'un actionneur, cet élément mobile étant guidé en translation par les trous 18 et 22 correspondants dans lesquels il s'insère. Il se déplace donc dans une direction orthogonale à la paroi supérieure du boîtier 12. Ainsi, la face supérieure trouée du châssis supérieur 16 occupant l'espace délimité par la fenêtre 14, associée aux extensions 28 des éléments mobiles insérées dans les trous du châssis supérieur 16, forme la surface déformable du dispositif d'affichage 10. Les éléments mobiles 26, 28 constituent les pixels tactiles de cette surface déformable puisqu'ils peuvent se déplacer chacun individuellement entre au moins une position haute et une position basse.

Pour provoquer le déplacement des éléments mobiles entre leurs positions haute et basse, les actionneurs comportent en outre chacun une bobine d'électroaimant 30 disposée dans la paroi cylindrique intérieure d'un trou traversant correspondant formé dans un châssis intermédiaire 32 fixé entre les châssis supérieur et inférieur 16 et 20. Ce châssis intermédiaire 32 est donc lui aussi percé de trous traversants disposés en matrice, chaque bobine disposée dans l'un de ses trous étant commandée individuellement par une source de courant électrique (non représentée) pour le déplacement individuel de chaque élément mobile 26, 28.

De façon optionnelle mais avantageuse, une matrice de verrouillage 34 est prévue dans le boîtier 12. Elle est disposée libre et guidée en translation latérale sur le châssis inférieur 20 et est percée par exemple de trous ovoïdes 36 disposés en matrice. Chaque élément mobile 26, 28 comporte alors en partie inférieure de son noyau 26 un collet 38 destiné à coopérer avec la matrice de verrouillage 34 de la façon suivante :
- dans une première position de déverrouillage de la matrice de verrouillage 34, les éléments mobiles 26, 28 sont centrés sur des portions respectives de diamètre maximal des trous ovoïdes 36, notamment des portions dont le diamètre est supérieur à celui des collets 38, de sorte que les éléments mobiles 26, 28 sont libres en translation dans les trous 18 et 22,
- dans une deuxième position de verrouillage de la matrice de verrouillage 34, les éléments mobiles 26, 28 sont centrés sur des portions respectives de diamètre minimal des trous ovoïdes 36, notamment des portions dont le diamètre est inférieur à celui des collets 38, de sorte que les éléments mobiles 26, 28 sont maintenus soit en position haute, soit en position basse, sans pouvoir revenir de l'une à l'autre.

La matrice de verrouillage 34 est en outre guidée en translation verticale, c'est-à-dire dans la direction de déplacement des éléments mobiles 26, 28, pour occuper une troisième position dite d'affichage à partir de sa deuxième position de verrouillage. Plus précisément, lors du passage de sa position de verrouillage à sa position d'affichage, selon un principe de bistabilité verticale, la matrice de verrouillage 34 entraîne tous les éléments mobiles en position haute vers le haut alors que tous les éléments mobiles en position basse restent tels quels. Les éléments mobiles en position haute sont alors portés vers une position dans laquelle leurs extensions 28 sortent des trous traversants 18 dans la fenêtre 14, créant ainsi le motif en relief souhaité.

Grâce à la matrice de verrouillage 34, le motif en relief peut être maintenu sans apport d'énergie supplémentaire et sa résistance à la pression d'un toucher est bien supérieure à ce qu'elle serait si seuls les actionneurs électromagnétiques devaient assurer ce maintien en position d'affichage.

Conformément à l'invention, la fenêtre 14 comporte une membrane souple élastique 40 disposée contre la matrice de pixels tactiles (i.e. les éléments déformables 26, 28 et en particulier les extensions 28) et s'étendant dans l'espace occupé par la surface déformable de cette matrice de pixels tactiles. Elle est apte à accompagner la déformation de cette dernière, par exemple par collage ou par maintien d'une certaine dépression entre cette membrane 40 et l'intérieur du boîtier 12. L'ensemble constitué de la surface déformable (i.e. la portion de châssis supérieur 16 occupant la surface de la fenêtre 14 et la partie supérieure des éléments mobiles) et de la membrane souple 40 forme l'écran d'affichage tactile du dispositif 10.

Enfin, le dispositif d'affichage 10 comporte des capteurs de position d'au moins un toucher formés, dans la variante de réalisation de la figure 1, de conducteurs électriques filaires 42x, 42y disposés en matrice entre les trous traversants 18. Les conducteurs électriques filaires 42x sont disposés parallèlement dans la fenêtre 14 selon une première direction principale de cette fenêtre de manière à détecter la position d'un toucher selon un premier axe d'abscisses. Les conducteurs électriques filaires 42y sont disposés parallèlement dans la fenêtre 14 selon une seconde direction principale de cette fenêtre, orthogonale à la première, de manière à détecter la position d'un toucher selon un second axe d'ordonnées. La détection, dont le principe est connu et ne sera pas détaillé, se fait par des mesures de variations capacitives ou résistives dans les conducteurs électriques 42x et 42y.

Les capteurs 42x, 42y sont solidaires de la membrane souple élastique 40. En pratique, ils peuvent être collés sous la membrane 40, c'est-à-dire contre sa face en contact avec la surface déformable de l'écran d'affichage. Ils peuvent également être noyés dans la membrane 40, notamment lorsque celle-ci est en matériau élastomère de type silicone ou caoutchouc. Ainsi, la matrice de capteurs 42x, 42y accompagne les déformations de la membrane souple élastique 40 et est découplée de l'actionnement électromagnétique des éléments mobiles 26, 28. Ce découplage est mécanique puisque les capteurs ne sont pas directement solidaires des actionneurs, mais il est également électrique lorsque le matériau utilisé pour la membrane 40 est isolant électriquement et que les capteurs sont noyés dans cette membrane. Par ailleurs, la membrane 40 assure une fonction de protection de la surface déformable contre les agressions ou chocs extérieurs ainsi que contre l'encrassement.

Les parties supérieures des éléments mobiles 26, 28, qualifiées de pixels tactiles, en coopération avec la membrane 40 comportant les capteurs 42x, 42y, vont maintenant être détaillées selon deux variantes de réalisation possibles illustrées sur les figures 2 et 3.

Selon la variante illustrée sur la figure 2, les pixels tactiles sont représentés indépendamment de la partie d'actionnement. Dans cette variante, ils ne sont d'ailleurs pas nécessairement solidaires des noyaux 26. Ils peuvent être constitués de pions indépendants simplement éventuellement poussés par les noyaux 26 (ou même par les éléments mobiles 26, 28 représentés sur la figure 1, s'ils ne remplacent pas les extensions 28 mais s'y ajoutent). Deux pixels tactiles 50A sont représentés en position basse. Deux autres pixels tactiles 50B sont représentés en position haute. Ils sont insérés dans les trous traversants 18 d'un support rigide, notamment, comme représenté sur la figure 1, un support rigide constitué du châssis supérieur 16.

En position basse des pixels, leurs faces supérieures 54 affleurent à la face supérieure du châssis supérieur 16, de sorte que la surface déformable est alors plane. La membrane souple élastique 40 disposée contre la matrice de pixels tactiles et s'étendant dans l'espace occupé par la surface déformable est collée uniquement aux faces supérieures 54 des pixels tactiles. Un avantage de cette configuration, comme cela est visible pour les pixels 50B en position haute, est que le relief affiché est continu, c'est-à-dire sans échancrure entre deux pixels 50B voisins. En revanche, un inconvénient de cette configuration, comme cela est visible entre deux pixels voisins 50A et 50B, l'un en position basse, l'autre en position haute, est que par élasticité, la membrane déformable 40 a tendance à entraîner tout pixel 50A voisin d'un pixel 50B en position haute.

Une solution pour remédier à cet inconvénient est de prévoir des moyens de rappel en position basse, par exemple des ressorts (identifiés par la référence 52A en position de compression minimale et par la référence 52B en position de compression maximale). Cette solution ajoute de la complexité. Par ailleurs, la raideur des ressorts doit être suffisamment élevée pour contrer l'action de la membrane souple élastique 40 mais également suffisamment faible afin de ne pas augmenter la force à exercer pour amener un pixel tactile en position haute. Concrètement, pour une membrane 40 en élastomère d'une épaisseur de 220 µm et des pixels tactiles d'environ 4 mm de diamètre espacés entre eux d'une distance de 1 mm, l'action de la membrane sur les pixels tactiles en position basse voisins de pixels en position haute peut s'élever à environ 2 Newton. Les ressorts doivent donc exercer une force de rappel supérieure, par exemple de 3 Newton, afin de limiter à environ 4 Newton, ce qui est déjà élevé, la force nécessaire pour amener les pixels 50B en position haute.

De façon optionnelle, un dispositif d'affichage à surface déformable selon l'invention peut comporter un système d'affichage lumineux réparti dans l'espace occupé par la surface déformable dans la fenêtre 14 pour générer un retour visuel améliorant la visibilité de l'écran d'affichage. Notamment, comme illustré sur la figure 2, des diodes électroluminescentes 55 peuvent être réparties dans l'espace occupé par la surface déformable, chaque diode 55 étant par exemple intégrée dans un pixel 50A, 50B au voisinage de sa face supérieure 54. En variante, chaque diode 55 peut être intégrée dans le châssis supérieur 16 entre les pixels. En variante également, ou en complément, des diodes 55 peuvent être disposées en périphérie de la surface déformable, par exemple dans les rebords intérieurs de la fenêtre 14 au voisinage des extrémités des conducteurs électriques filaires 42x, 42y.

Selon la variante illustrée sur la figure 3, les pixels tactiles sont également représentés indépendamment de la partie d'actionnement. Dans cette variante, ils ne sont d'ailleurs pas non plus nécessairement solidaires des noyaux 26. Ils peuvent être constitués de pions indépendants simplement éventuellement poussés par les noyaux 26 (ou par les éléments mobiles 26, 28 représentés sur la figure 1). Deux pixels tactiles 50A sont représentés en position basse. Deux autres pixels tactiles 50B sont représentés en position haute. Ils sont insérés dans des cavités 18' non traversantes d'un support souple 16' différent du châssis supérieur 16. Selon l'application, le support souple 16' peut remplacer le châssis supérieur 16 ou il peut être disposé et collé au dessus de ce dernier.

Dans cette variante, la membrane souple élastique 40 disposée contre la matrice de pixels tactiles et s'étendant dans l'espace occupé par la surface déformable est collée sur toute sa face interne au support souple 16' dont la face supérieure est plane lorsque tous les pixels tactiles sont en position basse. Les faces supérieures 54 des pixels tactiles ne sont pas en contact direct avec la membrane 40 mais sont séparés de celle-ci par des zones 56 de moindre épaisseur du support souple 16' situées dans le fond des cavités 18'. Un avantage de cette configuration, comme cela est visible entre deux pixels voisins 50A et 50B, l'un en position basse, l'autre en position haute, est que la membrane 40 n'exerce aucun entraînement sur celui des deux pixels voisins qui est en position basse. Son élasticité tend même à maintenir par défaut chaque pixel en position basse. Il n'est donc pas nécessaire de prévoir des moyens de rappel en position basse : cette variante est simple à concevoir, elle peut notamment être fabriquée par un processus industriel de type impression rotative pour un prix faible. Un autre avantage de cette configuration est qu'aucune contrainte n'est exercée sur les capteurs 42x, 42y quel que soit le relief affiché. En revanche, un inconvénient de cette configuration, comme cela est visible entre deux pixels voisins 50B en position haute, est que des échancrures apparaissent entre ces pixels, le relief affiché étant alors discontinu.

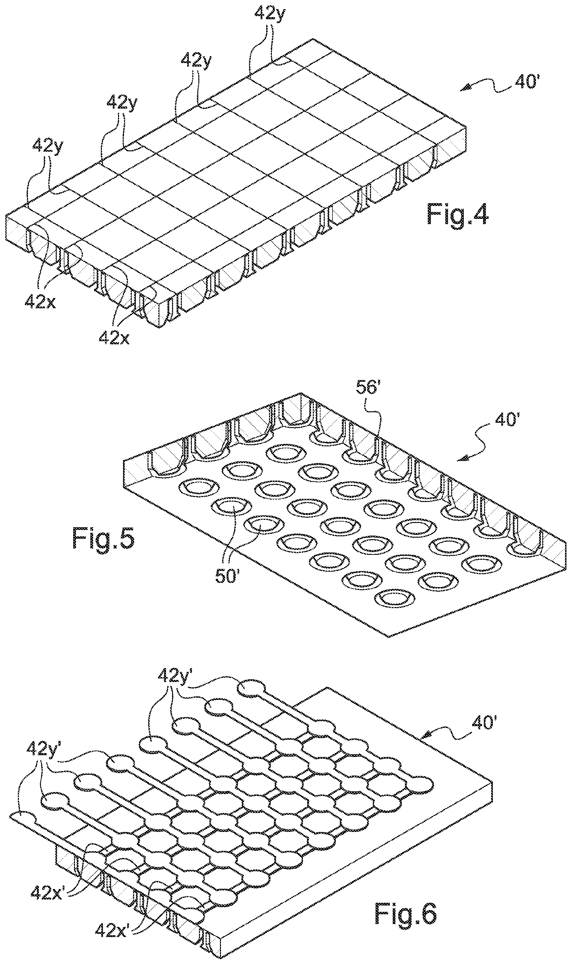

La figure 4 illustre une troisième variante de réalisation, pour laquelle seule la membrane souple élastique est représentée en perspective vue principalement de dessus. En effet, selon cette variante, la membrane souple, référencée ici 40', intègre les pixels tactiles et le support souple de la variante précédente. En d'autres termes, la membrane souple élastique, les pixels tactiles et le support souple sont formés par moulage dans un seul matériau souple élastique, par exemple un élastomère de type silicone ou caoutchouc, pour former une interface 40' dans laquelle sont également noyés les capteurs 42x, 42y au voisinage de sa surface externe de contact avec un utilisateur du dispositif d'affichage 10.

La figure 5 illustre la membrane souple élastique 40' en perspective vue principalement de dessous. Sous cet angle, les pixels tactiles 50' sont clairement visibles. Ils sont par exemple directement déplacés verticalement par les noyaux 26 (non représentés) ou par les éléments mobiles 26, 28 représentés sur la figure 1. Les zones de moindre épaisseur 56' formées dans le fond des cavités dans lesquels ils se trouvent permettent justement le déplacement des pixels tactiles 50' sans pour autant déformer la partie support pourtant moulée dans la même matière.

Bien entendu, des variantes de réalisation intermédiaires, entre la variante illustrée sur la figure 3 et celle illustrée sur les figures 4 et 5 peuvent être envisagées : notamment des variantes selon lesquelles les parties support souple et membrane souple à capteurs intégrés sont moulées dans la même matière, mais pas les pixels tactiles ; des variantes selon lesquelles les parties support souple et pixels tactiles sont moulées dans la même matière, mais pas la membrane souple ; ou des variantes selon lesquelles les parties membrane souple et pixels tactiles sont moulées dans la même matière, mais pas le support.

En outre, dans une même matière souple, des parties peuvent être rigidifiées par un traitement spécifique (par exemple la partie support ou les pixels). De même, des parties peuvent être traitées, notamment la zone supérieure de la partie membrane, pour rendre plus agréable l'interaction entre le dispositif d'affichage interactif 10 et un utilisateur: ce traitement peut être réalisé par des dépositions physico-chimiques de particules affleurantes. De façon alternative, une couche superficielle supplémentaire, en d'autres termes une « peau » fine, de texture différente de celle de la membrane souple élastique, peut être ajoutée au dessus de celle-ci pour améliorer l'interaction homme-machine. Cette peau peut être réalisée en un matériau plastique élastique ou un tissu élastique réputé agréable au toucher.

La figure 6 illustre une quatrième variante de réalisation, pour laquelle seule la membrane souple élastique est représentée en perspective vue principalement de dessus. Cette variante diffère de la précédente par les capteurs filaires 42x et 42y qui sont remplacés par des capteurs 42x' et 42y' en matière souple conductrice remplissant des canaux aménagés dans la membrane souple élastique 40'. Cette matière souple est par exemple une graisse conductrice, c'est-à-dire une graisse incluant des particules métalliques conductrices telles que de l'argent ou du cuivre.

En pratique, la partie supérieure de la membrane souple élastique 40', qui comporte ces canaux conducteurs peut être fabriquée selon une conception multi couches par collage ou surmoulage, sur une membrane souple comportant déjà par exemple les pixels tactiles et/ou le support souple, des éléments suivants conçus dans le même matériau souple et élastique :
- une première couche fine percée de canaux s'étendant selon l'axe des abscisses au dessus de chaque rangée de pixels tactiles, les canaux s'élargissant localement au dessus de chaque pixel tactile pour en recouvrir la surface de contact supérieure,
- une deuxième couche fine pleine recouvrant tous les canaux de la première couche,
- une troisième couche fine percée de canaux s'étendant selon l'axe des ordonnées au dessus de chaque colonne de pixels tactiles, les canaux s'élargissant localement au dessus de chaque pixel tactile pour en recouvrir la surface de contact supérieure, et
- une quatrième couche fine pleine recouvrant tous les canaux de la troisième couche.

Les canaux des première et troisième couches sont remplis de graisse conductrice formant ainsi la matrice de conducteurs 42x' et 42y' telle que représentée sur la figure 6 : les deux réseaux de conducteurs en abscisse et en ordonnée se superposent au dessus des pixels tactiles, là où ils présentent des élargissements, mais restent isolés l'un de l'autre grâce à la deuxième couche.

On notera que la quatrième variante, consistant à remplacer des conducteurs filaires par des canaux souples de graisse conductrice, a été présentée comme dérivée de la troisième variante, mais il est clair qu'elle peut également être dérivée des autres variantes de réalisation envisageables, notamment celles décrites précédemment.

Selon une autre variante non illustrée, l'ensemble de capteurs 42x' et 42y' est une matrice d'élastomère conducteur, notamment un élastomère chargé avec des particules conductrices, cette matrice d'élastomère conducteur étant également formée dans la membrane souple élastique 40' et apte à accompagner ses déformations. Comme précédemment, elle peut être disposée de manière à recouvrir au moins partiellement les pixels tactiles, ou plus généralement les éléments mobiles.

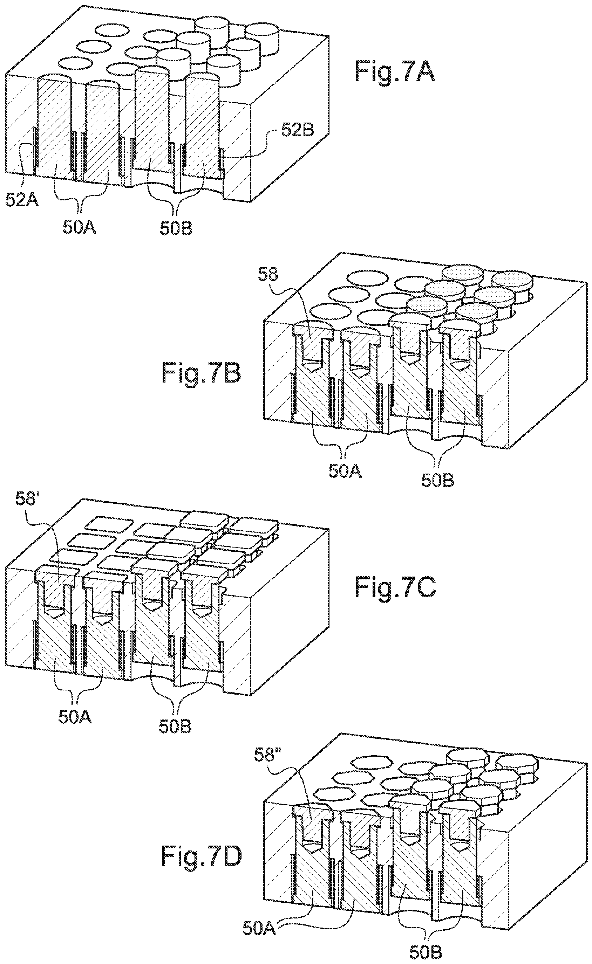

Enfin, les figures 7A, 7B, 7C et 7D représentent schématiquement en perspective différents modes de réalisation de pixels tactiles du dispositif d'affichage de la figure 1 conformément à la première variante de la figure 2. Mais là encore, ces différents modes de réalisation peuvent être aisément adaptés aux autres variantes de réalisation envisageables.

Selon un premier mode de réalisation représenté sur la figure 7A, le plus simple à réaliser techniquement et conforme à ce qui est illustré en figure 2, la partie supérieure des pixels tactiles 50A, 50B est cylindrique et présente un diamètre légèrement inférieur au diamètre intérieur des ressorts 52A, 52B.

Contrairement à ce premier mode de réalisation, selon les modes de réalisation représentés sur les figures 7B, 7C et 7D, la partie supérieure de chaque pixel tactile 50A, 50B présente un insert de manière à optimiser sa surface de contact 54.

Sur la figure 7B, l'insert 58 est circulaire, mais de diamètre supérieur au diamètre intérieur des ressorts 52A, 52B. Cette solution est la meilleure pour afficher des formes géométriques irrégulières comme des motifs complexes, arrondis, dissymétriques.

Sur la figure 7C, l'insert 58' est rectangulaire, voire carré. Cette solution est la meilleure pour afficher des formes géométriques régulières comme des lignes droites et des rectangles dont les directions principales correspondent aux axes d'abscisses et d'ordonnées des pixels tactiles.

Sur la figure 7D, l'insert 58" est octogonal. Cette solution peut être considérée comme un bon compromis entre les formes circulaire et rectangulaire pour afficher des lignes droites et des rectangles tels que précités mais également des diagonales ou motifs circulaires.

Il apparaît clairement qu'un dispositif d'affichage tactile et interactif tel que celui décrit précédemment selon ses différentes variantes permet de protéger la partie actionnement et d'augmenter le découplage entre l'actionnement et la détection de toucher en solidarisant les capteurs à une membrane souple élastique protectrice plutôt qu'aux actionneurs ou à leur support. Notamment, le découplage des actionneurs et des capteurs permet d'augmenter la surface des capteurs et/ou des éléments mobiles puisque leurs géométries deviennent indépendantes, ce qui améliore la sensibilité et le retour haptique du dispositif d'affichage.

En outre, la robustesse de ce dispositif, améliorée grâce à la protection de la surface déformable par la membrane souple élastique, et son coût de fabrication, d'autant plus faible que le mode de réalisation où les parties de support, pixels tactiles et membrane protectrice incluant les capteurs peuvent être fabriquées en une seule pièce monolithique, permettent d'envisager des applications dans le secteur automobile où la fabrication se fait à grande échelle. L'intérêt particulier de ce type de dispositif d'affichage dans une automobile est qu'il permet d'accéder simplement à des fonctions de conduite ou de confort sans distraire l'attention visuelle de l'automobiliste.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué selon la portée des revendications. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1. Dispositif (10) d'affichage à surface déformable comportant :
- une pluralité d'actionneurs à éléments mobiles (26, 28 ; 50A, 50B) déplaçables de manière à déformer la surface déformable, ces éléments mobiles étant répartis dans l'espace occupé par la surface déformable,
- un ensemble (42x, 42y) de capteurs de position d'au moins un toucher également répartis dans l'espace occupé par la surface déformable, et
- une membrane souple élastique (40 ; 40') disposée contre les éléments mobiles (26, 28 ; 50A, 50B), s'étendant dans l'espace occupé par la surface déformable et apte à accompagner la déformation de cette dernière,
**caractérisé en ce que** l'ensemble de capteurs (42x, 42y) est une matrice de fils conducteurs solidaire de la membrane souple élastique (40 ; 40') et apte à accompagner ses déformations, les fils conducteurs étant répartis de façon régulière dans l'espace occupé par la surface déformable en s'interposant entre les éléments mobiles (26, 28 ; 50A, 50B).

2. Dispositif (10) d'affichage à surface déformable comportant :
- une pluralité d'actionneurs à éléments mobiles (26, 28 ; 50A, 50B) déplaçables de manière à déformer la surface déformable, ces éléments mobiles étant répartis dans l'espace occupé par la surface déformable,
- un ensemble (42x, 42y) de capteurs de position d'au moins un toucher également répartis dans l'espace occupé par la surface déformable, et
- une membrane souple élastique (40 ; 40') disposée contre les éléments mobiles (26, 28 ; 50A, 50B), s'étendant dans l'espace occupé par la surface déformable et apte à accompagner la déformation de cette dernière,
**caractérisé en ce que** l'ensemble de capteurs (42x, 42y) est une matrice de fils conducteurs noyés dans la membrane souple élastique (40 ; 40') et apte à accompagner ses déformations, la membrane souple élastique (40 ; 40') étant formée d'un matériau isolant électriquement et les fils conducteurs étant répartis de façon régulière dans l'espace occupé par la surface déformable.

3. Dispositif (10) d'affichage à surface déformable comportant :
- une pluralité d'actionneurs à éléments mobiles (26, 28 ; 50A, 50B) déplaçables de manière à déformer la surface déformable, ces éléments mobiles étant répartis dans l'espace occupé par la surface déformable,
- un ensemble (42x', 42y') de capteurs de position d'au moins un toucher également répartis dans l'espace occupé par la surface déformable, et
- une membrane souple élastique (40 ; 40') disposée contre les éléments mobiles (26, 28 ; 50A, 50B), s'étendant dans l'espace occupé par la surface déformable et apte à accompagner la déformation de cette dernière,
**caractérisé en ce que** l'ensemble de capteurs (42x', 42y') est réparti de façon régulière dans l'espace occupé par la surface déformable en une matrice de canaux remplis d'un fluide conducteur, notamment une graisse conductrice, ces canaux étant formés dans la membrane souple élastique (40 ; 40'), aptes à accompagner ses déformations et disposés de manière à recouvrir au moins partiellement les éléments mobiles (26, 28 ; 50A, 50B).

4. Dispositif (10) d'affichage à surface déformable comportant :
- une pluralité d'actionneurs à éléments mobiles (26, 28 ; 50A, 50B) déplaçables de manière à déformer la surface déformable, ces éléments mobiles étant répartis dans l'espace occupé par la surface déformable,
- un ensemble (42x', 42y') de capteurs de position d'au moins un toucher également répartis dans l'espace occupé par la surface déformable, et
- une membrane souple élastique (40 ; 40') disposée contre les éléments mobiles (26, 28 ; 50A, 50B), s'étendant dans l'espace occupé par la surface déformable et apte à accompagner la déformation de cette dernière,
**caractérisé en ce que** l'ensemble de capteurs (42x', 42y') est réparti de façon régulière dans l'espace occupé par la surface déformable en une matrice d'élastomère conducteur, notamment un élastomère chargé avec des particules conductrices, cette matrice d'élastomère conducteur étant formée dans la membrane souple élastique (40 ; 40'), apte à accompagner ses déformations et disposée de manière à recouvrir au moins partiellement les éléments mobiles (26, 28 ; 50A, 50B).

5. Dispositif (10) d'affichage à surface déformable selon l'une quelconque des revendications 1 à 4, dans lequel la membrane souple élastique (40 ; 40') est formée dans un matériau élastomère de type silicone ou caoutchouc, ou formée d'un tissu élastique de type élasthanne ou soie.

6. Dispositif (10) d'affichage à surface déformable selon l'une quelconque des revendications 1 à 5, dans lequel la membrane souple élastique (40') comporte une première portion supérieure de contact avec un utilisateur dans laquelle sont noyés les capteurs de position (42x, 42y ; 42x', 42y'), une deuxième portion s'étendant vers les éléments mobiles et comportant une pluralité de pixels tactiles (50'), et une troisième portion de support s'étendant entre les pixels tactiles, les deuxième et troisième portions étant venues de matière avec la première portion.

7. Dispositif (10) d'affichage à surface déformable selon l'une quelconque des revendications 1 à 6, dans lequel les éléments mobiles (26, 28 ; 50A, 50B) sont répartis de façon régulière, notamment de façon matricielle, dans l'espace occupé par la surface déformable.

8. Dispositif (10) d'affichage à surface déformable selon l'une quelconque des revendications 1 à 7, dans lequel les capteurs (42x, 42y ; 42x', 42y') sont des capteurs capacitifs ou résistifs conducteurs d'électricité.

9. Dispositif (10) d'affichage à surface déformable selon l'une quelconque des revendications 1 à 8, comportant une matrice (34) de verrouillage des éléments mobiles (26, 28 ; 50A, 50B) à au moins trois positions fonctionnelle différentes :
- une première position fonctionnelle de déverrouillage dans laquelle les éléments mobiles (26, 28 ; 50A, 50B) sont libres de mouvement entre une position haute et une position basse,
- une deuxième position fonctionnelle de verrouillage dans laquelle seuls les éléments mobiles en position haute (50B) sont maintenus en position haute, les autres étant empêchés de prendre cette position haute, et
- une troisième position fonctionnelle d'affichage dans laquelle la matrice de verrouillage (34) porte, depuis la deuxième position de verrouillage, les éléments mobiles maintenus en position haute (50B) contre la membrane souple élastique (40 ; 40') pour la déformer.

10. Dispositif (10) d'affichage à surface déformable selon l'une quelconque des revendications 1 à 9, comportant un écran d'affichage comprenant :
- une plaque (16), cette plaque étant munie d'une pluralité de conduits traversants (18) dans lesquels sont insérés, libres en déplacement orthogonal par rapport à la plaque, les éléments mobiles (26, 28 ; 50A, 50B) des actionneurs, et
- la membrane souple élastique (40 ; 40') disposée contre la plaque.

11. Dispositif (10) d'affichage à surface déformable selon l'une quelconque des revendications 1 à 10, comportant une peau fine de texture différente de celle de la membrane souple élastique (40 ; 40') et s'étendant sur la face libre de la membrane souple élastique.

12. Dispositif (10) d'affichage à surface déformable selon l'une quelconque des revendications 1 à 11, comportant un système d'affichage lumineux (55) réparti dans l'espace occupé par la surface déformable, notamment une pluralité de diodes électroluminescentes réparties dans l'espace occupé par la surface déformable, chaque diode étant par exemple intégrée dans un élément mobile d'actionneur (26, 28 ; 50A, 50B) et/ou en périphérie de la surface déformable.

## Patentansprüche

1. Anzeigevorrichtung (10) mit verformbarer Oberfläche, umfassend:
- eine Vielzahl von Aktuatoren mit beweglichen Elementen (26, 28; 50A, 50B), die derart verlagerbar sind, dass sie die verformbare Oberfläche verformen, wobei diese beweglichen Elemente in dem Raum verteilt sind, der von der verformbaren Oberfläche belegt wird,
- eine Einheit (42x, 42y) von Positionssensoren mindestens einer Berührung, die ebenfalls in dem Raum, der von der verformbaren Oberfläche belegt wird, verteilt sind, und
- eine elastische biegsame Membran (40; 40'), die gegen die beweglichen Elemente (26, 28; 50A, 50B) angeordnet ist, die sich in dem Raum erstreckt, der von der verformbaren Oberfläche belegt wird und geeignet ist, um die Verformung dieser Letzteren zu begleiten,
**dadurch gekennzeichnet, dass** die Einheit von Sensoren (42x, 42y) eine Matrix leitender Drähte ist, die fest mit der elastischen biegsamen Membran (40; 40') verbunden und geeignet ist, um ihre Verformungen zu begleiten, wobei die leitenden Drähte regelmäßig in dem Raum, der von der verformbaren Oberfläche belegt wird, verteilt sind, indem sie sich zwischen die beweglichen Elemente (26, 28; 50A, 50B) fügen.

2. Anzeigevorrichtung (10) mit verformbarer Oberfläche, umfassend:
eine Vielzahl von Aktuatoren mit beweglichen Elementen (26, 28; 50A, 50B), die derart verlagerbar sind, dass sie die verformbare Oberfläche verformen, wobei diese beweglichen Elemente in dem Raum verteilt sind, der von der verformbaren Oberfläche belegt wird,
- eine Einheit (42x, 42y) von Positionssensoren mindestens einer Berührung, die ebenfalls in dem Raum, der von der verformbaren Oberfläche belegt wird, verteilt sind, und
- eine elastische biegsame Membran (40; 40'), die gegen die beweglichen Elemente (26, 28; 50A, 50B) angeordnet ist, die sich in dem Raum erstreckt, der von der verformbaren Oberfläche belegt wird und geeignet ist, um die Verformung dieser Letzteren zu begleiten,
**dadurch gekennzeichnet, dass** die Einheit von Sensoren (42x, 42y) eine Matrix leitender Drähte ist, die in der elastischen biegsamen Membran (40; 40') eingelassen und geeignet ist, diese Verformungen zu begleiten, wobei die elastische Membran (40; 40') aus einem elektrisch isolierenden Material hergestellt ist, und die leitenden Drähte regelmäßig in dem Raum, der von der verformbaren Oberfläche belegt wird, verteilt sind.

3. Anzeigevorrichtung (10) mit verformbarer Oberfläche, umfassend:
eine Vielzahl von Aktuatoren mit beweglichen Elementen (26, 28; 50A, 50B), die derart verlagerbar sind, dass sie die verformbare Oberfläche verformen, wobei diese beweglichen Elemente in dem Raum verteilt sind, der von der verformbaren Oberfläche belegt wird,
- eine Einheit (42x', 42y') von Positionssensoren mindestens einer Berührung, die ebenfalls in dem Raum, der von der verformbaren Oberfläche belegt wird, verteilt sind, und
- eine elastische biegsame Membran (40; 40'), die gegen die beweglichen Elemente (26, 28; 50A, 50B) angeordnet ist, die sich in dem Raum erstreckt, der von der verformbaren Oberfläche belegt wird und geeignet ist, um die Verformung dieser Letzteren zu begleiten,
**dadurch gekennzeichnet, dass** die Einheit von Sensoren (42x', 42y') regelmäßig in dem Raum, der von der verformbaren Oberfläche belegt wird, in einer Matrix von Kanälen verteilt ist, die mit einem leitenden Fluid gefüllt sind, insbesondere mit leitendem Fett, wobei diese Kanäle in der elastischen biegsamen Membran (40; 40') gebildet und geeignet sind, um ihre Verformungen zu begleiten, und derart angeordnet sind, dass sie die beweglichen Elemente (26, 28; 50A, 50B) mindestens teilweise abdecken.

4. Anzeigevorrichtung (10) mit verformbarer Oberfläche, umfassend:
eine Vielzahl von Aktuatoren mit beweglichen Elementen (26, 28; 50A, 50B), die derart verlagerbar sind, dass sie die verformbare Oberfläche verformen, wobei diese beweglichen Elemente in dem Raum verteilt sind, der von der verformbaren Oberfläche belegt wird,
- eine Einheit (42x', 42y') von Positionssensoren mindestens einer Berührung, die ebenfalls in dem Raum, der von der verformbaren Oberfläche belegt wird, verteilt sind, und
- eine elastische biegsame Membran (40; 40'), die gegen die beweglichen Elemente (26, 28; 50A, 50B) angeordnet ist, die sich in dem Raum erstreckt, der von der verformbaren Oberfläche belegt wird und geeignet ist, um die Verformung dieser Letzteren zu begleiten,
**dadurch gekennzeichnet, dass** die Einheit von Sensoren (42x', 42y') regelmäßig in dem Raum, der von der verformbaren Oberfläche belegt wird, in einem leitenden Elastomermaterial verteilt ist, insbesondere ein Elastomer, das mit leitenden Teilchen gefüllt ist, wobei diese leitende Elastomermaterialmatrix in der elastischen biegsamen Membran (40; 40') gebildet ist, die geeignet ist, ihre Verformungen zu begleiten, und derart angeordnet ist, dass sie die beweglichen Elemente (26, 28; 50A, 50B) mindestens teilweise abdeckt.

5. Anzeigevorrichtung (10) mit verformbarer Oberfläche nach einem der Ansprüche 1 bis 4, wobei die elastische biegsame Membran (40; 40') in einem Elastomermaterial des Typs Silikon oder Kautschuk gebildet ist, oder aus einem elastischen Textil des Typs Elasthan oder Seide gebildet ist.

6. Anzeigevorrichtung (10) mit verformbarer Oberfläche nach einem der Ansprüche 1 bis 5, wobei die elastische biegsame Membran (40') einen ersten oberen Abschnitt zum Kontakt mit einem Benutzer umfasst, in dem die Positionssensoren (42x, 42y; 42x', 42y') eingelassen sind, einen zweiten Abschnitt, der sich zu den beweglichen Elementen erstreckt und eine Vielzahl taktiler Pixel (50') umfasst, und einen dritten Tragabschnitt, der sich zwischen den taktilen Pixeln erstreckt, wobei der zweite und der dritte Abschnitt aus einem Teil mit dem ersten Abschnitt bestehen.

7. Anzeigevorrichtung (10) mit verformbarer Oberfläche nach einem der Ansprüche 1 bis 6, wobei die beweglichen Elemente (26, 28; 50A, 50B) regelmäßig insbesondere in Matrixart in dem Raum, der von der verformbaren Oberfläche belegt wird, verteilt sind.

8. Anzeigevorrichtung (10) mit verformbarer Oberfläche nach einem der Ansprüche 1 bis 7, wobei die Sensoren (42x, 42y; 42x', 42y') kapazitive oder resistive Sensoren, die Elektrizität leiten, sind.

9. Anzeigevorrichtung (10) mit verformbarer Oberfläche nach einem der Ansprüche 1 bis 8, die eine Matrix (34) zum Verriegeln der beweglichen Elemente 26, 28; 50A, 50B) in mindestens drei unterschiedlichen funktionalen Positionen umfasst:
- eine erste funktionale Position zum Entriegeln, in der sich die beweglichen Elemente (26, 28; 50A, 50B) frei zwischen einer oberen Position und einer unteren Position bewegen können,
- eine zweite funktionale Position zum Verriegeln, in der nur die beweglichen Elemente in oberer Position (50B) in oberer Position gehalten werden, wobei die anderen daran gehindert werden, diese obere Position einzunehmen, und
- eine dritte funktionale Position des Anzeigens, in der die Verriegelungsmatrix (34) die beweglichen Elemente, die in oberer Position (50B) gehalten werden, von der zweiten Verriegelungsposition gegen die elastische biegsame Membran (40; 40') trägt, um sie zu verformen.

10. Anzeigevorrichtung (10) mit verformbarer Oberfläche nach einem der Ansprüche 1 bis 9, die einen Anzeigebildschirm umfasst, umfassend:
- eine Platte (16), wobei diese Platte mit einer Vielzahl durchgehender Leitungen (18) versehen ist, in welche die beweglichen Elemente (26, 28; 50A, 50B) der Aktuatoren orthogonal bewegungsfrei in Bezug zu der Platte eingefügt sind, und
- die elastische biegsame Membran (40; 40'), die gegen die Platte angeordnet ist.

11. Anzeigevorrichtung (10) mit verformbarer Oberfläche nach einem der Ansprüche 1 bis 10, die eine feine Haut mit Textur, die von der der elastischen biegsamen Membran (40; 40') unterschiedlich ist und sich auf der freien Seite der elastischen biegsamen Membran erstreckt, umfasst.

12. Anzeigevorrichtung (10) mit verformbarer Oberfläche nach einem der Ansprüche 1 bis 11, die ein leuchtendes Anzeigesystem (55) umfasst, das in dem Raum, der von der verformbaren Oberfläche belegt wird, verteilt ist, insbesondere eine Vielzahl Licht emittierender Dioden, die zum Beispiel in ein bewegliches Aktuatorelement (26, 28; 50A, 50B) und/oder am Umfang der verformbaren Oberfläche integriert sind.

## Claims

1. Display device (10) having a deformable surface comprising:
- a plurality of actuators having mobile elements (26, 28; 50A, 50B) that can be moved so as to deform the deformable surface, with these mobile elements being distributed in the space occupied by the deformable surface,
- a set (42x, 42y) of position sensors for sensing the position of at least one touch likewise being distributed in the space occupied by the deformable surface, and
- an elastic flexible membrane (40; 40') placed against the mobile elements (26, 28; 50A, 50B), extending through the space occupied by the deformable surface and able to accompany the deformation of the latter,
**characterised in that** the set of sensors (42x, 42y) is an array of conducting wires secured to the elastic flexible membrane (40; 40') and able to accompany the deformations thereof, wherein the conducting wires are distributed in a regular manner in the space occupied by the deformable surface so as to be interposed between the mobile elements (26, 28; 50A, 50B).

2. Display device (10) having a deformable surface comprising:
- a plurality of actuators having mobile elements (26, 28; 50A, 50B) that can be moved so as to deform the deformable surface, with these mobile elements being distributed in the space occupied by the deformable surface,
- a set (42x, 42y) of position sensors for sensing the position of at least one touch likewise being distributed in the space occupied by the deformable surface, and
- an elastic flexible membrane (40; 40') placed against the mobile elements (26, 28; 50A, 50B), extending through the space occupied by the deformable surface and able to accompany the deformation of the latter, **characterised in that** the set of sensors (42x, 42y) is an array of conducting wires embedded in the elastic flexible membrane (40; 40') and able to accompany the deformations thereof, wherein the elastic flexible membrane (40; 40') is made of an electrically insulated material and the conducting wires are distributed in a regular manner in the space occupied by the deformable surface.

3. Display device (10) having a deformable surface comprising:
- a plurality of actuators having mobile elements (26, 28; 50A, 50B) that can be moved so as to deform the deformable surface, with these mobile elements being distributed in the space occupied by the deformable surface,
- a set (42x', 42y') of position sensors for sensing the position of at least one touch likewise being distributed in the space occupied by the deformable surface, and
- an elastic flexible membrane (40; 40') placed against the mobile elements (26, 28; 50A, 50B), extending through the space occupied by the deformable surface and able to accompany the deformation of the latter,
**characterised in that** the set of sensors (42x', 42y') is distributed in a regular manner in the space occupied by the deformable surface in an array of channels filled with a conducting fluid, in particular a conductive grease, with these channels being formed in the elastic flexible membrane (40; 40'), able to accompany the deformations thereof and arranged in such a way as to cover at least partially the mobile elements (26, 28; 50A, 50B).

4. Display device (10) having a deformable surface comprising:
- a plurality of actuators having mobile elements (26, 28; 50A, 50B) that can be moved so as to deform the deformable surface, with these mobile elements being distributed in the space occupied by the deformable surface,
- a set (42x', 42y') of position sensors for sensing the position of at least one touch likewise being distributed in the space occupied by the deformable surface, and
- an elastic flexible membrane (40; 40') placed against the mobile elements (26, 28; 50A, 50B), extending through the space occupied by the deformable surface and able to accompany the deformation of the latter,
**characterised in that** the set of sensors (42x', 42y') is distributed in a regular manner in the space occupied by the deformable surface in an array of conducting elastomer, in particular an elastomer loaded with conductive particles, with this array of conducting elastomer being formed in the elastic flexible membrane (40; 40'), able to accompany the deformations thereof and arranged in such a way as to cover at least partially the mobile elements (26, 28; 50A, 50B).

5. Display device (10) having a deformable surface according to any of claims 1 to 4, wherein the elastic flexible membrane (40; 40') is formed in an elastomeric material of the silicone or rubber type, or formed of an elastic fabric of the elastane or silk type.

6. Display device (10) having a deformable surface according to any of claims 1 to 5, wherein the elastic flexible membrane (40') comprises a first upper contact portion with a user wherein the position sensors (42x, 42y; 42x', 42y') are embedded, a second portion extending towards the mobile elements and comprising a plurality of tactile pixels (50'), and a third support portion extending between the tactile pixels, with the second and third portions being made in one piece with the first portion.

7. Display device (10) having a deformable surface according to any of claims 1 to 6, wherein the mobile elements (26, 28; 50A, 50B) are distributed in a regular manner, in particular in array fashion, in the space occupied by the deformable surface.

8. Display device (10) having a deformable surface according to any of claims 1 to 7, wherein the sensors (42x, 42y; 42x', 42y') are electricity conducting capacitive or resistive sensors.

9. Display device (10) having a deformable surface according to any of claims 1 to 8, comprising an array (34) for locking the mobile elements (26, 28; 50A, 50B) in at least three different functional positions:
- a first functional unlocking position wherein the mobile elements (26, 28; 50A, 50B) are free to move between a top position and a bottom position,
- a second functional locking position wherein only the mobile elements in top position (50B) are maintained in top position, with the others prevented from taking this top position, and
- a third functional display position wherein the array for locking (34) carries, from the second position of locking, the mobile elements maintained in top position (50B) against the elastic flexible membrane (40; 40') in order to deform it.

10. Display device (10) having a deformable surface according to any of claims 1 to 9, comprising a display screen comprising:
- a plate (16), this plate being provided with a plurality of pass-through ducts (18) wherein are inserted, free in orthogonal displacement in relation to the plate, the mobile elements (26, 28; 50A, 50B) of the actuators, and
- the elastic flexible membrane (40; 40') placed against the plate.

11. Display device (10) having a deformable surface according to any of claims 1 to 10, comprising a thin skin with texture different from that of the elastic flexible membrane (40; 40') and extending over the free surface of the elastic flexible membrane.

12. Display device (10) having a deformable surface according to any of claims 1 to 11, comprising a lighted display system (55) distributed in the space occupied by the deformable surface, in particular a plurality of light-emitting diodes distributed in the space occupied by the deformable surface, each diode being for example incorporated into an actuator mobile element (26, 28; 50A, 50B) and/or on the periphery of the deformable surface.
